Europäisches Patentamt

European Patent Office

Office européen des brevets

(19)

(11) Veröffentlichungsnummer : **0 253 376 B1**

(12) **EUROPÄISCHE PATENTSCHRIFT**

(45) Veröffentlichungstag der Patentschrift :
**11.03.92 Patentblatt 92/11**

(51) Int. Cl.$^5$ : **B60R 13/08, G10K 11/00**

(21) Anmeldenummer : **87110220.8**

(22) Anmeldetag : **15.07.87**

(54) Adhäsives Isolationssystem.

(30) Priorität : **18.07.86 DE 3624427**

(43) Veröffentlichungstag der Anmeldung :
**20.01.88 Patentblatt 88/03**

(45) Bekanntmachung des Hinweises auf die
Patenterteilung :
**11.03.92 Patentblatt 92/11**

(84) Benannte Vertragsstaaten :
**DE ES FR GB IT SE**

(56) Entgegenhaltungen :
**EP-A- 0 195 923**
**FR-A- 2 300 748**
**GB-A- 2 056 360**
**GB-A- 2 151 757**

(73) Patentinhaber : **Stankiewicz GmbH**
**W-3101 Adelheidsdorf (DE)**

Patentinhaber : **Bayerische Motoren Werke**
**Aktiengesellschaft**
**Patentabteilung AJ-30 Postfach 40 02 40**
**Petuelring 130**
**W-8000 München 40 (DE)**

(72) Erfinder : **Hofmann, Manfred**
**Im Stroth 5**
**W-3101 Nienhof (DE)**
Erfinder : **Tonhauser, Johann**
**Schweinthalerstrasse 6**
**W-8160 Miesbach (DE)**
Erfinder : **Karg, Dieter**
**Flurstrasse 28B**
**W-8061 Niederroth (DE)**

(74) Vertreter : **Melzer, Wolfgang, Dipl.-Ing. et al**
**Patentanwälte Dipl.-Ing. H. Mitscherlich**
**Dipl.-Ing. K. Gunschmann Dipl.-Ing. Dr.rer.nat.**
**W. Körber Dipl.-Ing. J. Schmidt-Evers Dipl.-Ing.**
**W. Melzer Steinsdorfstrasse 10**
**W-8000 München 22 (DE)**

## Beschreibung

Die Erfindung betrifft ein adhäsives zerstörungsfrei entfernbares Isolationssystem zur Schallisolation von Trennwänden, insbesondere in Kraftfahrzeugen.

Die ältere deutsche Patentanmeldung DE-A-35 10 932 = EP-A-0195923 = US-A-4735284 = JP-A-61273943 beschreibt, wie mit Hilfe einer adhäsiven Beschichtung eine optimale Nutzung der akustischen Parameter, z.B. in einem Masse-Feder-System erreicht werden kann, das im wesentlichen aus Schaum oder Vlies besteht, und zwar in Verbindung mit einer biegeweichen Schwerschicht. Eine solche Anordnung wird vorzugsweise als Formteil ausgebildet und hergestellt und wird zur Schallisolation im Stirn-Wand-Bodenbereich von Fahrzeugen, insbesondere Personenkraftfahrzeugen, verwendet. Durch das Aufbringen des adhäsiven Isolationssystems wird im wesentlichen durch die damit bewirkte Kopplung mit dem Untergrund, nämlich einem Blech, der körperschalldämpfende Effekt des an sich hochdämfenden Schaums, der als Feder verwendet wird, auf den Untergrund übertragen. Der Dämfungseffekt eines solchen adhäsiven Isolationssystems gemäß dem Hauptpatent ist so groß, daß die bisher sonst üblicherweise einzubringenden körperschalldämpfenden Beläge zumindest teilweise, im allgemeinen sogar vollständig, entbehrlich werden. Bei dem adhäsiven Isolationssystem gemäß dem Hauptpatent ist die akustische Gesamtwirkung, d.h. der Geräuschkomfort, in einem damit ausgerüsteten Fahrzeug derart hoch, daß die Gesamtwirkung auch dann nicht verschlechtert wird, wenn die bisher üblichen im Regelfall eingeschmolzenen Dämfungsbeläge entfernt werden.

Üblicherweise wird jedoch im Fahrzeugbau ein solches Isolationssystem mit einem Teppich beschichtet, d.h. ein Teppich wird auf die Oberseite des Isolationssystems, hier auf die dem Untergrund abgewandte Oberseite der Schwerschicht entweder aufkaschiert oder aufgeklebt. Hierdurch aber geht die erwünschte Biegeweichheit verloren, das System wird vergleichsweise biegesteif.

Demgemäß ist es Aufgabe der vorleigenden Erfindung, ein adhäsives Isolationssystem der eingangs gennanten Art

so weiterzubilden, daß es auch bei aufgebrachtem Teppich ohne Beeinträchtigung der akustisch günstigen Wirkung biegeweich ausgeführt ist.

Die Aufgabe wird erfindungsgemäß durch die kennzeichnenden Merkmale des Anspruch 1 gelöst.

Bei der erfindungsgemäßen Ausbildung wird darüber hinaus überraschend die akustische Wirkung nicht nur beibehalten, sondern sogar in aller Regel noch verbessert.

Die Erfindung wird durch die Merkmale der Unteransprüche weitergebildet.

Dabei ist darauf hinzuweisen, daß es dem Durchschnittsfachmann zwar bekannt ist, daß biegeweiche Anordnungen akutisch güngstige Eigenschaften besitzen, jedoch konnte bisher kein Isolationssystem angegeben werden, das ausreichend biegeweich ausgeführt ist und die gewünschten günstigen geräuschmindernden Einflüsse besitzt. Erst durch die anmeldungsgemäße Verknüpfung eines adhäsiven Systems gemäß patentanmeldung DE-A-35 10 932 mit der Entkopplung gemäß der vorliegenden Erfindung, d.h. durch eine durch Ankopplung genutzte körperchalldämpfende Wirkung, können die seit langem erwünschten Ergebnisse erzielt werden. Hierdurch werden gegenüber herkömmlichen serienmäßigen Ausstattungen von Kraftfahrzeugen deutliche Verbesserungen erzielt.

Akustische Wirkungen zeigen sich jedoch nicht nur in dem im allgemeinen erwünschten niederfrequenten Bereich, in dem hinsichtlich der Wirkungen der Motorordnung

gedämpft wird. Die anmeldungsgemäße Entkopplung bewirkt auch eine Luftschallabsorption im hochfrequenten Bereich. Der hochfrequente Bereich ist jedoch für die Silbenverständlichkeit (z.B. bei geführten Gesprächen) von erheblicher Bedeutung. Somit ergibt sich, daß durch die erfindungsgemäße Ausbildung des adhäsiven Isolationssystems mit Entkopplung nicht nur der Gesamtpegel der Geräusche in einem Fahrzeug abgesenkt, sondern auch die Silbenverständlichkeit erheblich verbessert wird.

Darüber hinaus ist ferner von Vorteil, daß die Herstellung eines adhäsiven Isolationssystems mit der anmeldungsgemäßen Entkopplung zwischen dem Teppich und der Schwerschicht des Isolationssystems auf keine technisch unlösbaren Schwierigkeiten stößt, vielmehr ist eine anmeldungsgemäße Kombination aus Schwerschicht, Entkoppler und Tepich insgesamt tiefziehfähig, wobei üblich Zusatzteile, wie z.B. Trittschutzauflagen, Absatzschoner oder dergleichen in bisher üblicher Weise mittels Hochfrequenzschweißverfahren auf die Teppichoberfläche aufgeschweißt werden können. Auch sonst übliche Weiterbehandlungsmaßnahmen wie Hinterschäumen oder dergleichen sind bei einem erfindungsgemäß augebildeten adhäsiven Isolationssystem wie bisher möglich.

Hinsichtlich der Abmischungen für das adhäsive Beschichtungsmaterial wird ausdrücklich auf das Hauptpatent verwiesen.

Darüber hinaus kann der der erfindung ganz allgemein zugrunde liegende Gedanke eines adhäsiven zerstörungsfrei entfernbaren Isolationssystems zur Schallisolation von Trennwänden, insbesondere von Kraftfahrzeugen beispielsweise auch dadurch realisiert werden, daß eine geeignete Bitumenabmischung verwendet wird. Aus der einschlägigen Literatur bzw. dem verfügbaren Prospektmaterial (vgl. z.B. "Tabellen und Übersichten zur Anwendung von Shell– Bitumen", Deutsche Shell AG, 1986) kann entnommen werden, daß Bitumen als Klebemasse für Schall - und Wärmedämmstoffen empfohen wird. Bei dem erfindungsgemäßen adhäsiven Isolationssystem sollen jedoch gerade keine Klebemassen verwendet werden, sondern vielmehr adhäsive Beschichtungen. Deshalb wäre eine Materialabmischung erforderlich, die diesem Anspruch, vor allem auch unter Berücksichtigung der Kältefestigkeit (Kälteflexibilität) gerech wird. Würde z.B. der Wert für die Kältefestigkeit zu hoch liegen, könnte bei Verwendung eines solchen Systems ein Fahrzeug der gewünschte dämpfende Effekt nich erreicht werden, da sich dann die adhäsive Beschichtung bei niederen Außentemperaturen, z.B. unterhalb des Gefrierpunktes, vom Blech-Untergrund lösen würde, und die für den erfindungsgemäßen Effekt erforderliche kraftschlüssige adhäsive Verbindung nicht mehr gegeben wäre. Bei einer Bitumenabmischung der in den Ünteransprüchen angegebenen Art wird diese Problem, nämlich die Verbesserung der Kälteflexibilität, durch Zumischung von ataktischem Polyproplen (APP) erreicht. Die Kälteflexibilität kann durch den Brechpunkt nach Fraaß gekennzeichnet werden, der aus den einschlägigen Tabellenwerken zu entnehmen ist.

Als gängige Bitumensorte sind in übergeordneten Begriffen das sogenannte Destillierbitumen und das Oxidationsbitumen bekannt, wobei das letztere auch als "geblasenes" Bitumen bezeichnet wird und durch den im allgemeinen niedrigen Brechpunkt günstigere Eigenschaften bei der Verwendung als adhäsive Beschichtung aufweist, als z.B. Destillierbitumen. Die Adhäsionsfähigkeit kann z.B. mit Hilfe des kennwertes "Penetration" beschrieben werden, bei demgemäß DIN 1995 die Eindringtiefe einer Nadel bei einer definierten Kraft und 10 s Einwirkdauer auf den Bitumen-Prüfkörper ermittelt wird. Penetrationswerte < 15 kennzeichnen harte Bitumensorten, Werte > 80 dagegen sehr weiche Sorten. Als für den vorgesehenen Zweck günstig haben sich Penetrationswerte im Bereich zwischen etwa 15 bis 40 erwiesen. Wegen der häfig starken räumlichen Verformung der Oberfläche der Schallisolationsteile, für die eine adhäsive Beschichtung vorgenommen ist, bietet sich eine Verarbeitung de APP-Bitumenmischung mit Hilfe einer Spritzanlage an. Dazu wiederum ist das Mischungverhältnis APP zu Bitumen zu ermitteln, das sowohl günstige Verarbeitungseigenschaften bewirkt als auch die erfindungsgemäß wesentliche adhäsive Wirkung entfaltet. Die erforderliche Spritzanlage muß auf ca. 220°C heizbar sein, damit das dann verflüssigte Material über Sprühdruck fein zerteilt auf die zu beschichtende Oberfläche aufgebracht werden kann.

Mischungsverhältnisse APP zu Bitumen von 1 : 1 bis ca. 1 : 2 haben sich als mit einer solchen Spritzanlage nicht verarbeitbar erwiesen. Ebenso erwies sich die Mischung APP zu Bitumen von ca. 1 : 4 als sehr klebrig, so daß die Aufgabe nicht gelöst werden konnte. Geeignet erwies sich dagegen eine Abmischung von APP zu Bitumen im Verhältnis von etwa 1 : 3.

Geeignet ist z.B. das Oxidationsbitumen Mexphalt R 85/25 in Abmischung mit ataktischem Polypropylen, Hoechst APP CR mit den kennzeichnenden Daten: Viskosität in der Schmelze bei 180°C von 50.000 mPa.s und dem Penetrationswert 35 bis 55.

Zusätzlich werden Füllstoffe eingemischt, um das adhäsive Verhalten fein abgestuft regulieren zu können. Hierzu eignen sich die in der Fachwelt bekannten anorganischen Materialien. Außerden sind Additive zuzufügen, wie z.B. Antioxidatien, um das Verspröden der Mischung zu verhindern. Aus dem Stand der technik ist es ferner bekannt, auch Verarbeitungshilfsmittel wie z.B. Wachs zuzusetzen.

In der Zeichnung sind Ausführungsformen der Erfindung beispielhaft dargestellt. Es zeigen in schematischer Darstellung:

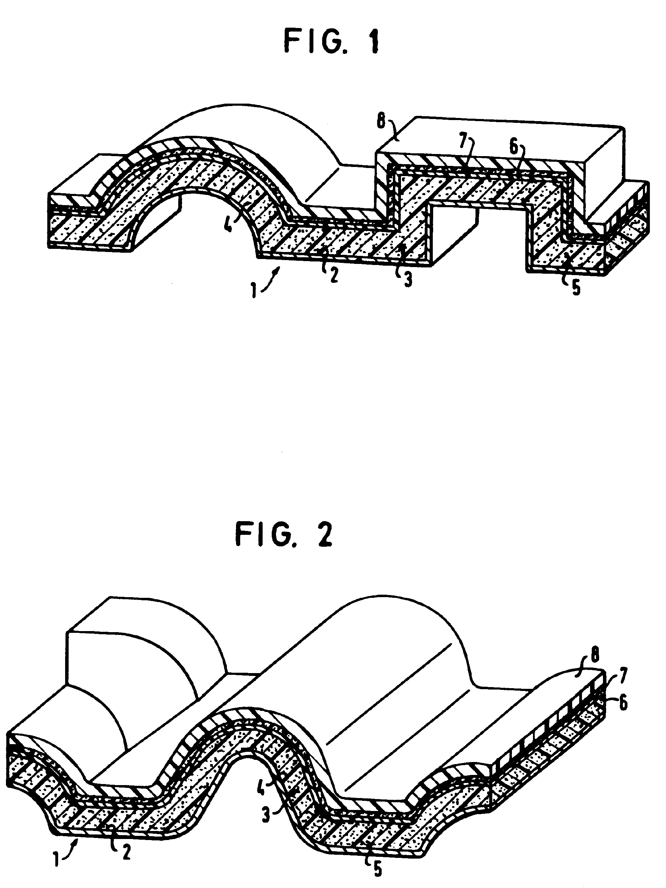

Fig. 1 und 2 jeweils in unterchiedlicher Formgebung ein auf einem durch ein profiliertes Blech gebildeten Wandteil aufgebrachtes schalldämmendes adhäsives Isolationssystem als Wandverkleidung mit über einen Entkoppler aufgebrachten Teppich.

Das den Wandteil 1 als Untergrund bildende Blech weist Profilierungen auf, denen die als Formteil ausgebildete Wandverkleidung, nämlich ein Isolationssystem 3 mit darüber angeordnetem Teppich 8, folgt, wobei stets etwa gleiche Dicke der Wandverkleidung beibehalten ist. Die Wandverkleidung ist auf dem Wandteil 1 haftend aufgebracht, ohne einen Kleber verwenden zu müssen, und zwar mittels einer adhäsiven Beschichtung 2 gemäß der deutschen Patentanmeldung DE-A-3540932 = EP-A-0195923 = US-A-4735284 = JP-A-61273943.

Die Wandverkleidung besteht aus einem Isolationssystem gemäß der in der deutschen Patentanmeldung DE-A- 35 10 932 geschilderten Art, das wiederum, wie an sich bekannt, aus einer sogennanten Feder 4, 5 aus Schaum, Vlies oder dergleichen und einer eine Schwerschicht bildenden Masse 6 aus einem gefüllten Kunststoff besteht. Gemäß der deutschen Patentanmeldung DE-A-35 10 932 ist örtlich unterschiedliches Schalldämmvermögen durch eine teilflächig aufgebrachte adhäsive Beschichtung 2 der Fedr 4, 5 erreicht. Gegebenenfalls kann ein ganzflächiges gleichmäßiges Schalldämmvermögen durch ein entsprechend ganzflächig aufgebrachte adhäsive Beschichtung 2 der Feder 4, 5 erreicht sein.

Die Adhsionskräfte des Beschichtungsmaterials der Feder 4, 5 bzw. der Feder 4, 5 selbst kann bei der Herstellung des Isolationssystems 3 praktisch stufenlos geändert werden, nämlich durch eine enstprechende Steuerung des Mischungsverhältnisses mit dem Vernetzungsmittel. Dabei ist bei im wesentlichen gleichbleibender Dicke und örtlich unterschiedlichem Schalldämmvermögen lediglich ein einziger einfacher Arbeitsgang erforderlich, wobei gegebenenfalls versteifende Abdeckungen zusätzlich aufzutragen sind.

Gemäß der Erfindung ist nun bei der Wandverkleidung zwischen der Schwerschicht 6 des Isolationssystems und dem darauf angeordneten Teppich 8 ein Entkoppler 7 aus einem weichelastischem überwiegend offenporigen (Material vorgesehen, vorzugsweise ein Schaumstoff oder einem akustisch in gleicher Weise wirkenden Vlies bzw. Filz. Dieser Entkoppler 7 ist als dünne Schicht mit einer Dicke im Bereich von ca. 5 mm aufgebracht. Der erfindungsgemäß vorgesehene Entkoppler 7 bewirkt, daß die sonst beobachtbare Verringerung der Biegeweichheit bei Aufbringen eines Teppichs auf das Isolationssystem vermieden ist, wobei darüber hinaus überraschend nicht nur die akustische Wir- kung beibehalten, sondern in der Regel sogar verbessert wird. Darüber hinaus ist eine solche Anordnung in herkömmlicher Weise einfach verarbeitbar.

## Patentansprüche

1. Adhäsives zerstörungsfrei entfernbares Isolationssystem (3) zur Schallisolation von Trennwänden, insbesondere in Kraftfahrzeugen, bei dem zum Bewirken einer kraftschlüssigen Verbindung zwischen den nachgeschalteten Schichten (Feder 4,5, Schwerschicht 6) des Isolationssystems (3) und dem Untergrund (1) eine aus einem stark untervernetzten Polyurethan vorgefertigte oder durch Aufspritzen einer stark untervernetzten 2-Komponenten-Mischung hergestellte Materialschicht vorliegt, dadurch **gekennzeichnet**, daß bei auf dem Isolationssystem (3) aufgebrachten Teppich (8) zwischen der Schwerschicht (6) des Isolationssystems (3) und dem Teppich (8) ein Entkoppler (7) aus weichelastischem überwiegend offenporigen Material angeordnet ist.

2. Adhäsives Isolationssystem nach Anspruch 1, dadurch **gekennzeichnet**, daß der Entkoppler (4) aus Schaumstoff besteht.

3. Adhäsives Isolationssystem nach Anspruch 1, dadurch **gekennzeichnet,** daß der Entkoppler aus akutisch wirksamen Vlies oder Filz besteht.

4. Adhäsives Isolationssystem eine der Ansprüche 1 bis 3, dadurch **gekennzeichnet**, daß der Entkoppler (7) dünn im Bereich von ca. 5 mm ausgebildet ist.

5. Adhäsives Isolationssystem nach einem der Ansprüche 1 bis 4, dadurch **gekennzeichnet**, daß die durch die Adhäsionskräfte gebundenen nachgeschalteten Schichten (4, 5, 6) akutisch dämfende Eigenschaften aufweisen.

6. Adhäsive Isolationssystem nach einem der Ansprüche 1 bis 5, dadurch **gekennzeichnet**, daß die adhäsive Beschichtung (2) ganz- oder teilfächig ausgeführt ist.

7. Adhäsives Isolationssystem nach einem der Ansprüche 1 bis 6, dadurch **gekennzeichnet**, daß die adhäsive Beschichtung (2) mit biegesteifen Abdeckungen aus Pappe, Kraftpapier, spritzbarem, aushärtbaren Kunststoffen oder dergleichen versehen ist.

8. Adhäsive Isolationssystem nach einem der Ansprüche 1 bis 6, dadurch **gekennzeichnet**, daß zum Bewirken der kraftschlüssigen Verbindung, stattdessen zwischen den nachgeschalteten Schichten (4, 5, 6) des Isolationssystems (3) und dem Untergrund (1) eine Abmischung aus Bitumen, vorzugsweise Oxidationsbitumen und ataktischem Polypropylen (APP), verwendet ist.

9. Adhäsives Isolationssytem nach Anspruch 8, **gekennzeichnet** durch eine Abmischung mit einem Verhältnis von ataktischem Polypropylen (AAP) zu Bitumen von etwa 1 : 3.

10. Adhäsives Isolationssytem nach Anspruch 8 oder 9, **gekennzeichnet** durch eine Viskosität in der Schmelze bei 180 °C von 50 000 mPa s und einem Penetrationswert nach DIN 1995 zwischen 15 und 55 vorzugsweise zwischen 35 und 55.

## Claims

1. An adhesive, non-destructively removable insulation system (3) for sound insulation of partition walls, particularly in motor vehicles, in which a layer of material prefabricated from a highly under-cross-linked polyurethane or produced by spraying on of a highly under-cross-linked two-component mixture is present to effect a friction-locked connection between the overlying layers (spring 4, 5, heavy layer 6) of the insulating system (3) and the substrate (1), characterised in that when a carpet (8) is laid on the insulating system (3) a decoupler (7) of soft elastic, predominantly open-pored material is arranged between the heavy layer (6) of the insulating system (3) and the carpet (8).

2. An adhesive insulating system according to claim 1, characterised in that the decoupler (7) consists of a foam material.

3. An adhesive insulating system according to claim 1, characterised in that the decoupler consists of acoustically effective fibre wool or felt.

4. An adhesive insulating system according to any one of claims 1 to 3, characterised in that the decoupler (7) is thin, with a thickness in the region of about 5 mm.

5. An adhesive insulating system according to any one of claims 1 to 4, characterised in that the overlying layers (4, 5, 6) held together by forces of adhesion have sound dampening properties.

6. An adhesive insulating system according to any one of claims 1 to 5, characterised in that the adhesive coating (2) is applied over the whole or part of the surface.

7. An adhesive insulating system according to any one of claims 1 to 6, characterised in that the acoustic coating is provided with stiff coverings of cardboard, kraft paper, sprayable hardenable plastics or the like.

8. An adhesive insulating system according to claim 7, characterised in that to effect the force-locked connection a mixture of bitumen, preferably oxidation bitumen, and atactic polypropylene (APP) is used instead between the overlying layers (4, 5, 6) of the insulating system (3) and the substrate (1).

9. An adhesive insulating system according to claim 8, characterised by a mixture having a ratio of atactic polypropylene (APP) to bitumen of about 1:3.

10. An adhesive insulating system according to claim 8 or claim 9, characterised in that the mixture has a melt viscosity at 180°C of > 50,000 mPa.s and a penetration value according to DIN 1995 between 15 and 55, preferably between 35 and 55.

**Revendications**

1. Système d'isolation adhésif (3) amovible sans être détruit, pour l'isolation sonique de cloisons séparatrices, en particulier dans des véhicules à moteur, dans lequel, pour réaliser une liaison à force entre les couches successives (couche élastique 4, 5, couche lourde 6) du système d'isolation (3) et le fond (1), se trouve une couche de matière préfabriquée en un polyuréthane fortement sous-réticulé, ou produite par pulvérisation d'un mélange binaire fortement sous-réticulé, **caractérisé** en ce que dans le cas où un tapis (8) est posé sur le système d'isolation (3) on dispose entre la couche lourde (6) du système d'isolation (3) et le tapis (8) un élément de découplage (7) en matière tendre élastique, principalement à pores ouverts.

2. Système d'isolation adhésif selon la revendication 1, caractérisé en ce que l'élément de découplage (7) est constitué par de la mousse.

3. Système d'isolation adhésif selon la revendication 1, caractérisé en ce que l'élément de découplage est constitué de lainage ou de feutre efficace acoustiquement.

4. Système d'isolation adhésif selon une des revendications 1 à 3, caractérisé en ce que l'élément de découplage (7) est mince, avec une épaisseur d'environ 5 mm.

5. Système d'isolation adhésif selon une des revendications 1 à 4, caractérisé en ce que les couches successives (4, 5, 6) liées par les forces d'adhérence présentent des propriétés d'amortissement acoustique.

6. Système d'isolation adhésif selon une des revendications 1 à 5, caractérisé en ce que la couche adhésive (2) est exécutée en une seule fois ou par secteurs partiels.

7. Système d'isolation adhésif selon une des revendications 1 à 6, caractérisé en ce que la couche adhésive (2) est munie d'une couverture rigide en carton, en papier kraft, en matières plastiques applicables par pulvérisation et durcissables, ou autres.

8. Système d'isolation adhésif selon une des revendications 1 à 6, caractérisé en ce que, pour réaliser la liaison à force on utilise, à la place, entre les couches successives (4, 5, 6) du système d'isolation (3) et le fond (1) un mélange à base de bitume, de préférence de bitume d'oxydation et de polypropylène atactique (APP).

9. Système d'isolation adhésif selon la revendication 6, caractérisé par un mélange avec une proportion de polypropylène atactique (APP) par rapport au bitume d'environ 1/3.

10. Système d'isolation adhésif selon la revendication 8 ou 9, caractérisé par une viscosité en fusion à 180°C > 50,000 mPa.s et une valeur de pénétration selon la norme DIN 1995 entre 15 et 55, de préférence entre 35 et 55.

# FIG. 1

# FIG. 2